# DEMANDE DE BREVET EUROPEEN

(11) **EP 2 765 506 A1**
(43) Date de publication de la demande: **13.08.2014**
(21) Numéro de dépôt: 14153310.9
(22) Date de dépôt: 30.01.2014
(51) Int. Cl.: G06F 9/44, G01C 23/00

(54) **Dispositif de visualisation et de contrôle pour cockpit d'aéronef, système de pilotage et aéronef associés**

(30) Priorité: 07.02.2013 FR 1300262
(71) Demandeur: Thales, 92200 Neuilly Sur Seine (FR)
(72) Inventeur: Leullier, François, 33187 Le Haillan Cedex (FR)
(74) Mandataire: Domenego, Bertrand

(57) **Abrégé**

Dispositif de contrôle et de visualisation pour cockpit d'aéronef, configuré pour permettre à un pilote d'interagir fonctionnellement avec des applications (12A, 12B) embarquées, chaque application utilisant un protocole de communication (P1, P2, P3), le dispositif de contrôle et de visualisation (10) comprenant des moyens d'affichage (19) pour l'affichage de pages de dialogue (21) d'applications, des moyens de saisie (16) pour la saisie de données destinées aux applications (12), et une zone de brouillon (14) pour l'affichage de données saisies avant leur affectation à une application.

Le dispositif est configuré pour interagir sélectivement avec au moins une première application (12A) utilisant un premier protocole de communication (P1) et au moins une deuxième application (12B) utilisant un deuxième protocole de communication (P2) différent du premier protocole de communication (P1).

Système de pilotage et aéronef associés.

## Description

La présente invention concerne le domaine des dispositifs de visualisation et de contrôle pour aéronef, permettant au pilote d'interagir avec des équipements embarqués de l'aéronef, plus spécifiquement avec des applications de commande et de contrôle de ces équipements.

Il est possible de munir un cockpit d'aéronef d'un dispositif multifonction de visualisation et de contrôle comprenant un écran d'affichage pour afficher des pages de dialogue avec des applications de commande d'équipements embarqués, un clavier alphanumérique pour saisir des données, et une zone de brouillon pour le stockage temporaire et l'affichage de données saisies au clavier alphanumérique et au moins une touche de validation pour l'insertion des données stockées dans la zone de brouillon dans une page de dialogue d'une application.

Lorsque qu'une page de dialogue d'une application est active et que le pilote reçoit des informations en relation avec une autre application, le pilote peut immédiatement saisir des données à la volée dans la zone de brouillon, avant de sélectionner la page de dialogue de l'autre application et d'attribuer les données stockées dans la zone brouillon à cette autre application.

De tels dispositifs multifonction de visualisation et de contrôle sont connus dans le domaine aéronautique sous l'acronyme MCDU pour « Multi-purpose Control and Display Unit » en anglais. La zone de brouillon est nommée communément « scratchpad », qui signifie bloc de brouillon en anglais.

Ces dispositifs de visualisation et de contrôle répondent au standard aéronautique ARINC 739, qui détermine notamment un protocole de communication pour le dispositif de visualisation et de contrôle.

Les aéronefs modernes possèdent de nombreux équipements et de nombreuses applications associées avec lesquelles les pilotes doivent dialoguer. Il est possible de munir un cockpit d'aéronef d'une pluralité de dispositifs de contrôle et de visualisation pour dialoguer avec différents groupes d'applications. Néanmoins, ceci a un impact négatif sur l'ergonomie du poste de pilotage.

Un des buts de l'invention et de proposer un dispositif de visualisation et de contrôle d'applications de pilotage d'un aéronef, qui soit ergonomique et qui facilite pour le pilote l'interaction avec les applications de pilotage de l'aéronef.

A cet effet, l'invention propose un dispositif de visualisation et de contrôle pour cockpit d'aéronef, configuré pour permettre à un pilote d'interagir fonctionnellement avec des applications embarquées, chaque application utilisant un protocole de communication, le dispositif de contrôle et de visualisation comprenant des moyens d'affichage pour l'affichage de pages de dialogue d'applications, des moyens de saisie pour la saisie de données destinées aux applications, et une zone de brouillon pour l'affichage de données saisies avant leur affectation à une application, caractérisé en ce qu'il est configuré pour interagir sélectivement avec au moins une première application en utilisant un premier protocole de communication et avec au moins une deuxième application en utilisant un deuxième protocole de communication différent du premier protocole de communication.

Selon d'autres modes de réalisation, le dispositif comprend une ou plusieurs des caractéristiques suivantes, prise(s) isolément ou selon toutes les combinaisons techniquement possibles :
- le dispositif de contrôle et de visualisation comprend une première interface de communication pour la communication avec la première application selon le premier protocole de communication et une deuxième interface de communication pour la communication avec la deuxième application selon le deuxième protocole de communication ;
- le premier protocole de communication est défini par le standard aéronautique ARINC 739 ;
- le deuxième protocole de communication est un protocole de communication pour la communication du dispositif de contrôle et de visualisation avec un serveur de gestion de la ou les deuxième(s) application(s).
- le deuxième protocole de communication est un protocole de communication non standardisé ;
- le dispositif de contrôle et de visualisation possède un premier mode de fonctionnement avec brouillon dans lequel les données saisies dans la zone de brouillon sont envoyées à la première application ;
- le dispositif de contrôle et de visualisation possède un deuxième mode de fonctionnement avec brouillon dans lequel les données saisies dans la zone de brouillon sont affectées à la deuxième application ;
- le dispositif de contrôle et de visualisation est configuré pour permettre la saisie de données dans la zone de brouillon pendant le premier mode de fonctionnement et l'envoi desdites données vers la deuxième application après commutation dans le deuxième mode de fonctionnement ;
- le dispositif de contrôle et de visualisation est configuré de telle manière que dans le deuxième mode de fonctionnement, les données sont envoyées à la deuxième application après validation par action sur une touche de validation ;
- le dispositif de contrôle et de visualisation comprend une touche de validation pour valider l'exécution des données saisies dans la zone de brouillon par la première application ;
- le dispositif de contrôle et de visualisation est configuré pour envoyer les données saisies dans la zone de brouillon à la deuxième application sans validation de l'exécution ;
- le dispositif de contrôle et de visualisation est commutable dans un mode de fonctionnement en flux continu dans lequel des données saisies sont envoyées à la deuxième application sans stockage intermédiaire dans la zone de brouillon ;
- le dispositif de contrôle et de visualisation comprend une mémoire de stockage et possède un mode de fonctionnement en bloc-notes dans lequel les données saisies dans la zone de brouillon sont stockées dans un fichier de stockage situé dans la mémoire de stockage ; et
- le dispositif de contrôle et de visualisation est configuré pour la récupération des données enregistrées dans le fichier de stockage et leur récupération dans la zone de brouillon en vue de leur allocation à la première application ou à la deuxième application.

En outre, l'invention concerne un système de pilotage pour aéronef comprenant des applications pour l'exécution de fonctions de l'aéronef et un dispositif de visualisation et de contrôle tel que décrit ci-dessus pour permettre à un pilote d'interagir avec les applications.

Par ailleurs, l'invention concerne un aéronef comprenant un dispositif de visualisation et de contrôle tel que décrit ci-dessus.

L'invention sera mieux comprise à la lecture de la description détaillée qui va suivre, donnée uniquement à titre d'exemple non limitatif, et faite en se référant aux Figures, sur lesquelles :
- la Figure 1 est une représentation schématique d'un aéronef selon l'invention,
- la Figure 2 est une représentation schématique d'un dispositif de visualisation et de contrôle et d'un système de pilotage selon l'invention, et
- la Figure 3 est une représentation schématique d'un dispositif de visualisation et de contrôle et d'un système de pilotage selon une variante de l'invention.

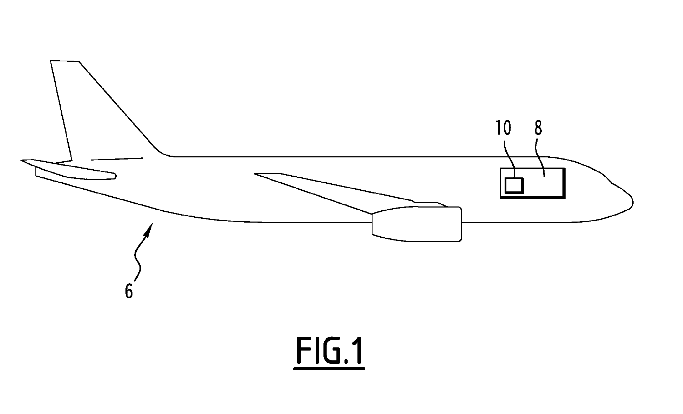

La Figure 1 illustre un aéronef 6 selon l'invention comprenant un système de pilotage 8 selon l'invention. Le système de pilotage 8 comprend un dispositif de contrôle et de visualisation 10 selon l'invention disposé dans le cockpit d'un aéronef 6 et configuré pour permettre à un pilote d'interagir fonctionnellement avec des applications du système de pilotage 8.

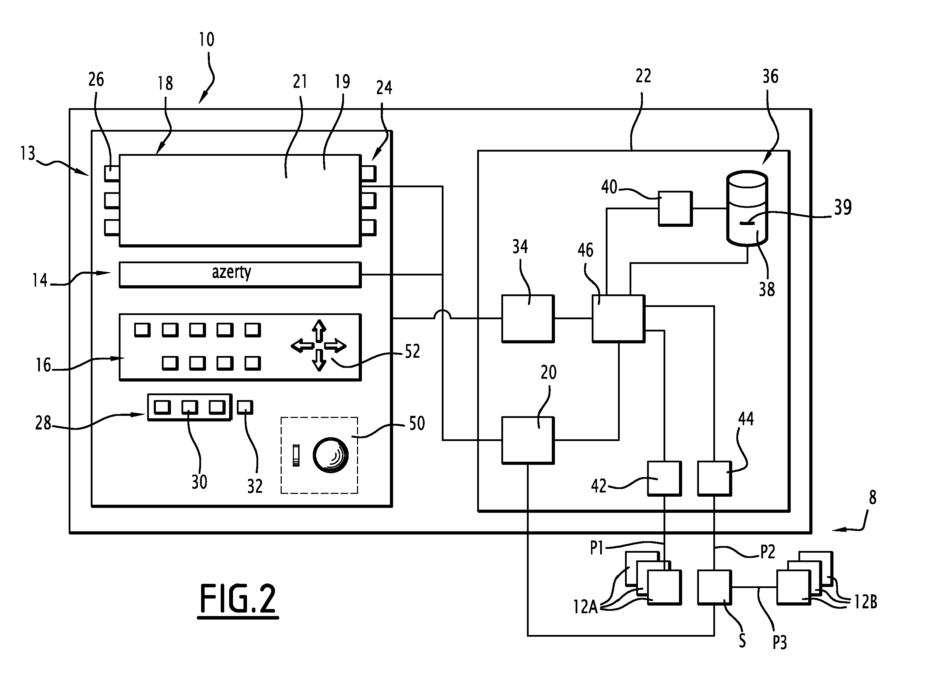

En référence à la Figure 2, le système de pilotage 8 comprend également ces applications, ainsi qu'un serveur S dédié à la gestion de certaines des applications et à leur communication avec le dispositif de contrôle et de visualisation 10. Ceci est décrit plus en détail dans ce qui suit.

Les applications sont des applications logicielles. Il s'agit par exemple d'applications de gestion de plan de vol, de gestion de communication vocale ou écrite avec le sol, de navigation aéroportuaire, de gestion d'affichage d'informations dans le cockpit, de gestion de systèmes de l'avion, d'échange d'information avec la compagnie aérienne, etc.

Les applications sont exécutées par exemple par des équipements électroniques embarqués du système de pilotage, notamment des équipements remplaçables en ligne, connus dans le domaine aéronautique sous l'acronyme LRU pour « Line Replaceable Unit » en anglais. De tels équipements se présentent sous la forme de boîtiers connectables de manière amovible au système électronique de l'aéronef.

Les termes « interaction fonctionnelle » ou « dialogue » signifient que le dispositif de visualisation et de contrôle 10 permet au pilote de visualiser des données des applications et de modifier des données des applications pour contrôler ces applications. Pour ce faire, le dispositif de visualisation et de contrôle 10 communique de manière bidirectionnelle avec les applications.

Dans le domaine aéronautique, les communications entre les équipements électroniques sont effectuées selon des protocoles de communication dont certains répondent à des standards, en particulier les standards ARINC. Deux équipements utilisant des protocoles de communication différents ne peuvent communiquer directement entre eux.

Des standards aéronautiques sont notamment le standard ARINC 739 et le standard ARINC 661.

Le standard ARINC 739 définit les propriétés relatives aux dispositifs multi-fonctions de contrôle et de visualisation à bord des aéronefs ou MCDU. Le standard ARINC 739 définit notamment un protocole de communication.

Le standard ARINC 661 définit la structure des données utilisées et transférées par certains types de dispositifs de visualisation pour cockpit connu sous l'acronyme CDS pour « Cockpit Display Systems » en anglais. Le standard ARINC 661 définit également un protocole de communication utilisé par certaines applications pour dialoguer avec le serveur S qui est dédié à leur gestion. Le serveur S sert également d'intermédiaire pour la communication de ces applications avec le dispositif de visualisation.

Le dispositif 10 est configuré pour interagir fonctionnellement avec une seule application à la fois. Cette application est désignée par « application courante » dans ce qui suit.

Le dispositif de visualisation et de contrôle 10 est configuré pour interagir avec des premières applications 12A suivant un premier protocole de communication P1 et pour interagir avec des deuxièmes applications 12B suivant un deuxième protocole de communication P2.

Le premier protocole de communication est par exemple conforme au standard ARINC 739.

Le deuxième protocole de communication est par exemple un protocole de communication non standardisé pour la communication du dispositif 10 avec le serveur S de gestion des applications 12B. Ce deuxième protocole de communication P2 est notamment utilisé par le dispositif 10 pour communiquer au serveur S les informations relatives à l'actionnement de moyens de saisie que comprend le dispositif 10.

Le serveur S est dédié aux deuxièmes applications 12B. Les deuxièmes applications 12B interagissent avec le serveur S selon un troisième protocole de communication P3. Le troisième protocole de communication P3 est défini par la norme ARINC 661. Le troisième protocole de communication P3 est différent du premier et du deuxième protocoles de communication P1, P2.

Le dispositif de visualisation et de contrôle 10 comprend une interface homme-machine 13 et une unité de commande 22 reliée à l'interface homme-machine 13 et aux applications avec lesquelles le dispositif de visualisation et de contrôle 10 permet d'interagir.

L'interface homme-machine 13 comprend des moyens d'affichage 18 pour l'affichage de données relatives aux applications, des moyens de saisie 16 pour la saisie de données, une zone brouillon 14 pour le stockage et l'affichage temporaire des données saisies et au moins une touche de validation 24 pour l'attribution des données saisies et stockées dans la zone brouillon 14 à une application.

Dans l'exemple de la Figure 2, les données saisies sont des caractères alphanumériques formant le mot « azerty ».

Les moyens d'affichage 18 comprennent un écran d'affichage 19 configuré pour afficher des données d'une application sélectionnée, nommée application courante.

A noter que sur la Figure 2, l'écran d'affichage 19 est schématiquement représenté à proximité des moyens de saisie 16 et de la zone brouillon 14.

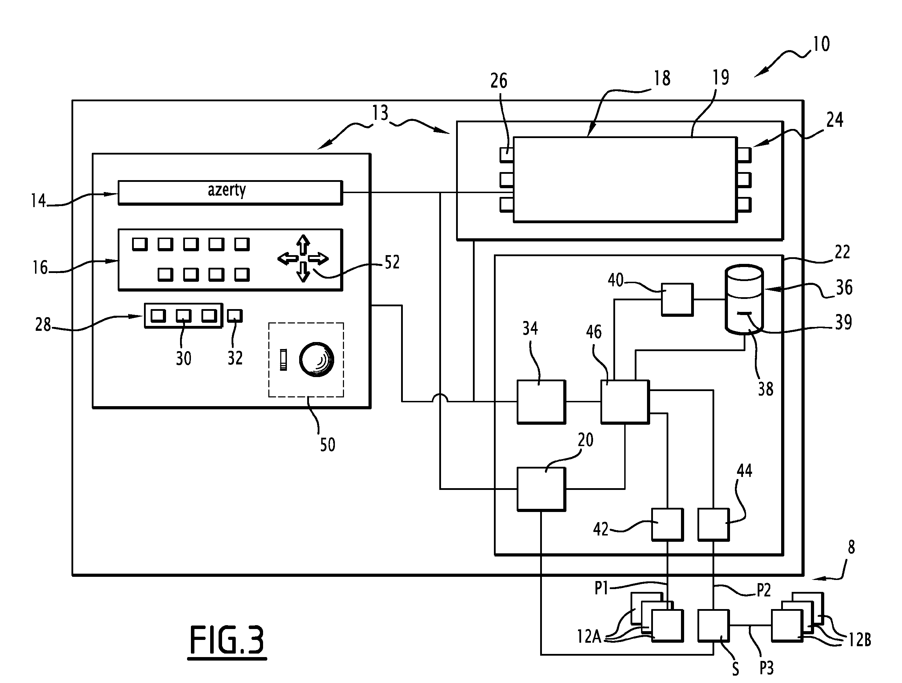

Toutefois, en référence à la Figure 3, dans certains modes de réalisation, l'écran d'affichage 19 est déporté par rapport aux moyens de saisie 16 et à la zone brouillon 14. Par exemple, l'écran d'affichage 19 correspond à un écran du cockpit situé sensiblement en face du siège du pilote sensiblement à hauteur de tête, et les moyens de saisie 16 et la zone brouillon 14 sont en contrebas de l'écran d'affichage 19 et décalés latéralement par rapport à l'écran d'affichage 19.

A noter également que la zone de brouillon 14 et les moyens de saisie 16 sont préférablement disposés à proximité l'un de l'autre.

Ceci a pour effet que le pilote dispose dans son champ visuel à la fois des moyens de saisie 16 et de la zone brouillon 14, et n'a pas donc pas besoin de tourner la tête pour lire les caractères qu'il vient de saisir dans la zone brouillon 14.

Les données de chaque application sont affichées dans une page de dialogue 21 associée à une application donnée. Les pages de dialogue 21 sont éditables, c'est-à-dire qu'il est possible de les modifier ou d'y insérer des données, par exemple sous la forme de caractères alphanumériques.

Les données de certaines pages de dialogue 21 sont affichées sur plusieurs lignes. De préférence, chaque ligne correspond à une fonction respective de l'application courante.

Les données de certaines autres pages de dialogue 21 sont affichées sous forme graphique. Par exemple, les données de certaines pages de dialogue se présentent sous la forme d'une carte de navigation avec laquelle le pilote interagit.

Les moyens de saisie 16 comprennent un clavier alphanumérique, ici un clavier physique comprenant des touches.

En variante, les moyens de saisie 16 comprennent un clavier virtuel dont les touches sont actionnées tactilement ou par un curseur déplacé via un média actionnable. Ceci est décrit plus en détail par la suite.

La zone brouillon 14 comprend une zone d'affichage pour l'affichage des données saisies à l'aide des moyens de saisie 16.

Les touches de validation 24 comprennent des touches de sélection de ligne 26, connues sous l'acronyme LSK pour « Line Selectable Key » en anglais. En outre, les touches de validation 24 comprennent au moins une touche de validation auxiliaire 32, ici exactement une.

Comme on le verra par la suite, la touche de validation auxiliaire 32 est principalement utilisée pour l'interaction du dispositif 10 avec les deuxièmes applications 12B.

Chaque touche de sélection de ligne 26 est disposée en regard d'une ligne de l'écran d'affichage 19. Dans un mode de fonctionnement, l'activation d'une touche de sélection de ligne 26 permet d'affecter des caractères stockés dans la zone brouillon 14 à l'application courante, en l'insérant dans la ligne correspondante de la page de dialogue. Des touches de sélection de ligne 26 sont disposées le long de chaque bord latéral de l'écran d'affichage 19.

Les moyens d'affichage 18, les moyens de saisie 16, la zone de brouillon 14 et les touches de sélection 26 sont nécessaires à la mise en oeuvre du standard ARINC 739 et se retrouvent sur les MCDU classiques.

L'interface homme-machine 13 comprend en outre des touches de fonction 28 pour sélectionner des modes de fonctionnement du dispositif de visualisation et de contrôle 10.

Les touches de fonction 28 comprennent des touches associées aux différents modes de fonctionnement du dispositif de contrôle et de visualisation.

Les touches de fonction 28 comprennent notamment une touche de commutation 30 permettant d'activer sélectivement un premier mode de fonctionnement et un deuxième mode de fonctionnement.

L'unité de commande 22 comprend un contrôleur d'affichage 20 propre à commander, d'une part, l'écran 19 pour l'affichage des données d'applications et, d'autre part, la zone brouillon 14 pour l'affichage des données saisies et stockées temporairement.

L'unité de commande 22 comprend un contrôleur de saisie 34 propre à détecter toute interaction de l'opérateur avec l'interface homme-machine 13 (moyens de saisie, touches de sélection de ligne, touches de fonctions, touches de validation) pour déclencher les actions correspondantes. Le contrôleur de saisie 34 est relié à l'interface homme-machine 13.

L'unité de commande 22 comprend une mémoire 36 pour le stockage de données. La mémoire 36 comprend une zone de mémoire tampon 38 pour le stockage temporaire et au moins un fichier de stockage 39.

L'unité de commande 22 comprend un contrôleur de bloc-notes 40 relié à la mémoire 36 et propre à stocker des données dans le fichier de stockage 39, et récupérer des données stockées dans le fichier de stockage 39.

L'unité de commande 22 comprend une première interface de communication 42 configurée pour la communication de données avec les premières applications 12A et une deuxième interface de communication 44 configurée pour la communication de données avec les deuxièmes applications 12B. La première interface de communication 42 et la deuxième interface de communication 44 sont distinctes.

La première interface de communication 42 est reliée aux premières applications pour l'échange de données avec les premières applications. La première interface de communication 42 est propre à échanger des données avec les premières applications selon le premier protocole de communication P1.

La première interface 42 est propre à mettre en forme des données fournies par le dispositif de visualisation et de contrôle pour les rendre exploitables par les premières applications 12A, et, inversement, à mettre en forme les données reçues des premières applications 12A pour les rendre exploitables par le dispositif de visualisation et de contrôle 10.

En pratique, la première interface 42 est reliée à plusieurs bus de communication (dont un seul est représenté sur la Figure 2) auxquels sont reliés les équipements électroniques embarqués sur lesquels sont exécutés les premières applications 12A.

La deuxième interface de communication 44 est reliée, via le serveur S, aux deuxièmes applications 12B pour l'échange de données avec les deuxièmes applications 12B. Ces applications 12B sont également connues sous le nom de « User Applications », qui vient de l'anglais et signifie application d'utilisateur.

La deuxième interface de communication 44 est propre à échanger des données avec les deuxièmes applications selon le deuxième protocole de communication P2.

La deuxième interface 44 est ici reliée aux deuxièmes applications 12B par l'intermédiaire du serveur S. Le serveur S interagit avec les deuxièmes applications 12B au moyen du troisième protocole de communication P3 défini par la norme ARINC 661.

Le serveur S est en outre relié au contrôleur d'affichage 20.

La deuxième interface 44 est propre à mettre en forme des données fournies par le dispositif de visualisation et de contrôle 10 pour les rendre exploitables par les deuxièmes applications 12B, ici par l'intermédiaire du serveur S, et, inversement, à mettre en forme les données reçues des deuxièmes applications 12B, par l'intermédiaire du serveur, pour les rendre exploitables par le dispositif de visualisation et de contrôle 10.

En pratique, la deuxième interface 44 est reliée via le serveur S à un bus de communication auquel sont reliés les équipements électroniques embarqués sur lesquels sont exécutés les deuxièmes applications 12B.

L'unité de commande 22 comprend un contrôleur principal 46 pour commander les différents éléments de l'unité de commande 22 en fonction de données fournies par ces éléments. Le contrôleur principal 46 est relié au contrôleur d'affichage 20, au contrôleur de saisie 34, à la mémoire 36, au contrôleur de bloc-notes 40, à la première interface 42 et à la deuxième interface 44.

Le contrôleur principal 46 est propre à recevoir les données fournies par les différents éléments de l'unité de commande 22, traiter les données récupérées et fournir des données aux différents éléments en fonction des traitements effectués.

Le dispositif de visualisation et de contrôle 10 comprend plusieurs modes de fonctionnement qui sont décrits ci-dessous.

Le dispositif de visualisation et de contrôle 10 comprend un premier mode de fonctionnement avec brouillon pour l'interaction avec une première application 12A par l'intermédiaire de la zone brouillon 14.

Dans le premier mode de fonctionnement (conforme au protocole de communication du standard ARINC 739), la page de dialogue 21 de la première application 12A courante est affichée sur les moyens d'affichage 18. Des caractères alphanumériques saisis à l'aide des moyens de saisie 16 sont stockés et affichés dans la zone brouillon 14. Les caractères saisis sont plus spécifiquement stockés dans la mémoire tampon 38 associée à la zone brouillon 14. Les caractères saisis dans la zone brouillon 14 sont communiqués à la première application courante.

L'affichage des caractères saisis dans la zone brouillon 14 est effectué par l'intermédiaire du contrôleur de saisie 34 qui détecte les actions du pilote, du contrôleur principal 46 qui reçoit ces caractères saisis et du contrôleur d'affichage 20 qui commande leur affichage sur la zone de brouillon 14.

L'enregistrement des caractères saisis dans la zone de brouillon 14 est effectué par l'intermédiaire du contrôleur de saisie 34 qui détecte les actions du pilote, du contrôleur principal 46 qui reçoit ces caractères saisis et les stocke dans la mémoire tampon 36.

La communication des caractères saisis dans la zone de brouillon 14 à la première application courante 12A est effectuée par l'intermédiaire du contrôleur de saisie 34 qui détecte les actions du pilote, du contrôleur principal 46 qui reçoit ces caractères saisis, les traite et les envoie à la première interface 42, qui les envoie à la première application 12A courante.

Une fois la saisie de caractère terminée, le pilote active une touche de validation 24, par exemple une touche de sélection de ligne 26, pour insérer les caractères saisis dans la ligne correspondante de la page de dialogue 21 de la première application courante. Dans ce cas, la zone de brouillon 14 est effacée ainsi que la mémoire tampon 38. L'instruction de validation est communiquée à la première application courante 12A qui exécute l'instruction correspondant aux caractères saisis dans la zone de brouillon 14. L'affichage des moyens d'affichage 18 est mis à jour en fonction, notamment par insertion des caractères de la zone brouillon 14 dans la page de dialogue 21 de la première application 12A.

Alternativement, le pilote sélectionne une nouvelle première application 12A. Dans ce cas, la page de dialogue 21 de la nouvelle application courante est affichée et le contenu de la zone brouillon 14 est communiqué à la nouvelle première application courante 12A par l'intermédiaire de la première interface 42.

Ensuite, le pilote valide la saisie, ce qui déclenche l'exécution d'une instruction correspondante par la nouvelle première application courante et l'effacement du contenu de la zone brouillon 14 et de la mémoire tampon 38. L'affichage des moyens d'affichage 18 est mis à jour en fonction, notamment par insertion des caractères de la zone brouillon 14 dans la page de dialogue 21 de la nouvelle première application courante. Le contenu de la zone brouillon 14 est effacé de l'ancienne première application courante.

Le dispositif de visualisation et de contrôle 10 comprend un deuxième mode de fonctionnement avec brouillon pour l'interaction avec une deuxième application 12B par l'intermédiaire de la zone brouillon 14.

Dans ce deuxième mode de fonctionnement, dans lequel une deuxième application 12B est l'application courante, des caractères saisis dans la zone brouillon 14 sont affichés dans la zone brouillon 14 et stockés dans la mémoire tampon 38 associée.

Lorsque le pilote valide les caractères, par exemple par activation de la touche de validation secondaire 32, les caractères saisis dans la zone de brouillon sont envoyés à la deuxième application 12B, par l'intermédiaire de la deuxième interface 44 et du serveur S. Le contenu de la zone brouillon 14 est inséré dans la page de dialogue de la deuxième application 12B. La zone brouillon 14 et la mémoire tampon 38 sont effacées.

Alternativement, le pilote sélectionne une nouvelle deuxième application 12B, ce qui provoque l'affichage de la page de dialogue 21 correspondante, puis lorsque le pilote valide la zone brouillon 14, le contenu de la zone brouillon 14 est envoyé à la nouvelle deuxième application courante 12B. Le contenu de la zone brouillon 14 est inséré dans la page de dialogue 21 de la nouvelle deuxième application courante 12B. La zone brouillon 14 et la mémoire tampon 38 sont effacées.

Le dispositif de visualisation et de contrôle 10 est commutable entre le premier mode de fonctionnement avec brouillon et le deuxième mode de fonctionnement avec brouillon, en particulier, en cours de saisie dans la zone brouillon 14.

Par exemple, dans un scénario possible, le dispositif de visualisation et de contrôle 10 est dans le premier mode de fonctionnement et la page de dialogue 21 d'une première application 12A est affichée. Le pilote saisie des caractères dans la zone brouillon 14. Les caractères saisis sont affichés et stockés dans la zone brouillon 14. Ils sont communiqués au fur et à mesure à la première application courante 12A. Le pilote sélectionne le deuxième mode de fonctionnement et une deuxième application 12B. La page de dialogue de la deuxième application est affichée. Lorsque le pilote actionne une touche de validation 24, le contenu de la zone de brouillon 14 est envoyé à la deuxième application 12B.

Le dispositif de visualisation et de contrôle 10 comprend un mode de fonctionnement en flux continu, ici pour l'interaction avec une deuxième application 12B.

Dans le mode de fonctionnement en flux continu, la page de dialogue 21 d'une deuxième application 12B est affichée. La zone brouillon 14 est désactivée. Les données saisies par le pilote via l'interface homme-machine 13 sont envoyées directement à la deuxième application 12B, sans affichage préalable dans la zone brouillon 14 ni validation du contenu de la zone brouillon 14.

Le dispositif de visualisation et de contrôle 10 comprend en outre un mode de fonctionnement en bloc-notes.

Dans ce mode de fonctionnement, une page de bloc-notes est affichée sur les moyens d'affichage 18, reprenant le contenu du fichier de stockage 39. Les caractères saisis sont alors affichés dans la zone brouillon 14 et stockés dans sa mémoire tampon 38. Sur validation par le pilote, les caractères saisis sont enregistrés dans le fichier de stockage 39 situé dans la mémoire et sont affichés dans la page de bloc-notes.

Le dispositif de visualisation et de contrôle 10 est configuré pour l'ouverture de la page de bloc-notes, la copie d'une suite de caractères de la page de bloc-notes dans la zone brouillon 14, la sélection d'une application (première application 12A ou deuxième application 12B) et d'un mode de fonctionnement pour la communication avec cette application, et l'envoi du contenu de la zone brouillon 14 à l'application courante.

Ainsi, il est possible de récupérer des caractères dans la page de bloc-notes pour les affecter à une application.

Il est possible de passer d'un mode de fonctionnement pour l'interaction avec une application (première application 12A ou deuxième application 12B) au mode de fonctionnement en bloc-notes en cours de saisie dans la zone de brouillon 14.

Par exemple, dans un scénario possible, le dispositif de visualisation et de contrôle 10 est dans le premier mode de fonctionnement et la page de dialogue d'une première application 12A est affichée. Le pilote saisit des caractères dans la zone brouillon 14. Les caractères saisis sont affichés dans la zone brouillon 14 et stockés dans la mémoire tampon 38. Ils sont communiqués au fur et à mesure à la première application courante 12A. Le pilote sélectionne le mode de fonctionnement en bloc-notes. Les caractères déjà transmis à la première application 12A sont effacés de cette première application. La page de bloc-notes est affichée. Sur validation par le pilote, le contenu de la zone brouillon 14 est inséré dans la page de bloc-notes. La zone brouillon 14 et la mémoire tampon 38 sont effacées.

Le dispositif de visualisation et de contrôle 10 est configuré pour permettre à un pilote de basculer d'un mode de fonctionnement à un autre.

Le dispositif de visualisation et de contrôle de la Figure 2 est du type MCDU à clavier alphanumérique physique.

Dans un mode de réalisation, le dispositif de visualisation et de contrôle 10 comprend une touche de fonction 28 pour chaque mode de fonctionnement, l'activation d'une touche de sélection 28 activant le mode de fonctionnement associé. En variante, il comprend une touche de sélection 28 permettant de faire défiler les différents modes de fonctionnement.

En variante non représentée, l'interface homme-machine 13 du dispositif de visualisation et de contrôle 10 comprend un écran tactile sur lequel sont définis des moyens d'affichage sous la forme d'une zone d'affichage, des moyens de saisie sous la forme par exemple d'un clavier alphanumérique virtuel comprenant des touches virtuelles affichées dans une zone de l'écran tactile, et une zone brouillon définie dans une zone de l'écran tactile.

Pour la validation du contenu de la zone brouillon et son affectation à un champ d'une page de dialogue, l'interface homme-machine 13 comprend par exemple des touches de validation virtuelles. En variante, la validation est effectuée du fait du toucher par le pilote du champ de la page d'accueil auquel le contenu de la zone brouillon 14 doit être affecté.

Pour la sélection d'un mode de fonctionnement par le biais d'une interface homme machine à écran tactile, il est possible de prévoir toute action, comme par exemple un toucher sur l'écran tactile avec déplacement suivant une ligne sensiblement horizontale.

Par ailleurs, dans une variante, le dispositif de visualisation et de contrôle 10 est configuré pour la sélection d'une application parmi les premières applications 12A et les deuxièmes applications 12B, et le passage automatique d'un mode de fonctionnement pour l'interaction avec une première application 12A à un mode de fonctionnement pour l'interaction avec une deuxième application 12B en fonction de l'application sélectionnée. Une page de bloc-notes est par exemple sélectionnable au même titre qu'une application.

Dans ce cas, l'interface homme-machine 13 est dépourvue de touche de sélection de mode de fonctionnement, ou comprend une touche de sélection de mode de fonctionnement pour forcer un mode de fonctionnement particulier. Par exemple, elle comprend une touche de sélection du mode de fonctionnement en flux continu pour les deuxièmes applications 12B.

Le dispositif de contrôle et de visualisation 10 de la Figure 2 comprend un écran d'affichage 19 pour l'affichage notamment de la page de dialogue 21 de l'application courante. En option, le dispositif de contrôle et de visualisation 10 comprend plusieurs écrans d'affichage sur lesquels les pages de dialogue 21 de différentes applications sont affichables simultanément. Le dispositif de contrôle et de visualisation 10 interagit dans ce cas avec une seule application en même temps, et le dispositif de contrôle et de visualisation 10 est configuré pour signaler au pilote l'écran affichant la page de dialogue 21 de l'application courante.

Toujours en référence à la Figure 2, en variante, le dispositif de visualisation et de contrôle possède une interface homme-machine analogue à celle d'une unité de contrôle à curseur et clavier désigné par l'acronyme KCCU pour « Keyboard and Cursor Control Unit » en anglais.

L'interface homme-machine 13 diffère de celle du dispositif de visualisation et de contrôle de la Figure 2 en ce qu'elle comprend en outre un dispositif de contrôle à curseur 50 (en pointillés sur la Figure 2). Le contrôleur de saisie 34 de l'unité de commande 22 est configuré pour traiter des données en provenance du dispositif de contrôle à curseur 50. Le dispositif de contrôle à curseur 50 comprend par exemple un rotacteur et/ou une roue pivotante.

L'interface homme-machine 13 comprend en outre un ensemble de flèches de sélection 52, connu sous le nom anglophone de « Rocker Switch ». L'actionnement des flèches 52 est pris en charge par le contrôleur de saisie 34. Dans l'exemple de la Figure 2, les flèches sont intégrées aux moyens de saisie 16.

La deuxième interface 44 est configurée pour mettre en forme les données correspondant aux interactions du pilote avec le dispositif de contrôle à curseur 50 et/ou l'ensemble de flèches de sélection 52, de manière à les rendre exploitables pour les premières applications 12A.

L'interface homme machine 13 permet ainsi des interactions avec les applications par l'insertion de caractères alphanumériques dans les pages de dialogue 21 ou par d'autres actions utilisant le déplacement d'un curseur ou le déplacement dans la page de dialogue 21 ou dans des menus déroulants par le biais des flèches de sélection 52 ou du dispositif de contrôle à curseur 50.

Le dispositif de visualisation et de contrôle 10 a été décrit dans un contexte d'interaction fonctionnelle avec les applications ARINC 661 et les applications ARINC 739. De manière générale, le dispositif de visualisation et de contrôle 10 est adapté pour interagir fonctionnellement avec des applications, chaque application utilisant un protocole de communication de préférence conforme à un standard ARINC, les applications utilisant au moins deux protocoles de communication distincts.

## Revendications

1. Dispositif de contrôle et de visualisation pour cockpit d'aéronef, configuré pour permettre à un pilote d'interagir fonctionnellement avec des applications (12A, 12B) embarquées, chaque application utilisant un protocole de communication (P1, P2, P3), le dispositif de contrôle et de visualisation (10) comprenant des moyens d'affichage (19) pour l'affichage de pages de dialogue (21) d'applications, des moyens de saisie (16) pour la saisie de données destinées aux applications (12), et une zone de brouillon (14) pour l'affichage de données saisies avant leur affectation à une application,
**caractérisé en ce qu'**il est configuré pour interagir sélectivement avec au moins une première application (12A) en utilisant un premier protocole de communication (P1) et avec au moins une deuxième application (12B) en utilisant un deuxième protocole de communication (P2) différent du premier protocole de communication (P1).

2. Dispositif de contrôle et de visualisation selon la revendication 1, comprenant une première interface de communication (42) pour la communication avec la première application (12) selon le premier protocole de communication (P1) et une deuxième interface de communication (44) pour la communication avec la deuxième application (12B) selon le deuxième protocole de communication (P2).

3. Dispositif de contrôle et de visualisation selon la revendication 1 ou 2, dans lequel le premier protocole de communication (P1) est défini par le standard aéronautique ARINC 739.

4. Dispositif de contrôle et de visualisation selon l'une quelconque des revendications précédentes, dans lequel le deuxième protocole de communication (P2) est un protocole de communication pour la communication du dispositif de contrôle et de visualisation (10) avec un serveur (S) de gestion de la ou les deuxième(s) application(s) (12B).

5. Dispositif de contrôle et de visualisation selon la revendication 4, **caractérisé en ce que** le deuxième protocole de communication (P2) est un protocole de communication non standardisé.

6. Dispositif de contrôle et de visualisation selon l'une quelconque des revendications précédentes, possédant un premier mode de fonctionnement avec brouillon dans lequel les données saisies dans la zone de brouillon (14) sont envoyées à la première application (12A).

7. Dispositif de contrôle et de visualisation selon l'une quelconque des revendications précédentes, possédant un deuxième mode de fonctionnement avec brouillon dans lequel les données saisies dans la zone de brouillon (14) sont affectées à la deuxième application (12B).

8. Dispositif de contrôle et de visualisation selon la revendication 7, configuré pour permettre la saisie de données dans la zone de brouillon (14) pendant le premier mode de fonctionnement et l'envoi desdites données vers la deuxième application (12B) après commutation dans le deuxième mode de fonctionnement.

9. Dispositif de contrôle et de visualisation selon la revendication 7 ou 8, configuré de telle manière que dans le deuxième mode de fonctionnement, les données sont envoyées à la deuxième application (12B) après validation par action sur une touche de validation (24, 32).

10. Dispositif de contrôle et de visualisation selon l'une quelconque des revendications précédentes, comprenant une touche de validation (24, 32) pour valider l'exécution des données saisies dans la zone de brouillon (14) par la première application (12A).

11. Dispositif de contrôle et de visualisation selon la revendication 10, configuré pour envoyer les données saisies dans la zone de brouillon (14) à la deuxième application (12A) sans validation de l'exécution.

12. Dispositif selon l'une quelconque des revendications précédentes, commutable dans un mode de fonctionnement en flux continu dans lequel des données saisies sont envoyées à la deuxième application sans stockage intermédiaire dans la zone de brouillon (14).

13. Dispositif selon l'une quelconque des revendications précédentes, comprenant une mémoire de stockage (36) et possédant un mode de fonctionnement en bloc-notes dans lequel les données saisies dans la zone de brouillon (14) sont stockées dans un fichier de stockage (39) situé dans la mémoire de stockage (36).

14. Dispositif selon la revendication 13, configuré pour la récupération des données enregistrées dans le fichier de stockage et leur récupération dans la zone de brouillon (14) en vue de leur allocation à la première application (12A) ou à la deuxième application (12B).

15. Système de pilotage pour aéronef comprenant des applications (12A, 12B) pour l'exécution de fonctions de l'aéronef et un dispositif de visualisation et de contrôle (10) selon l'une quelconque des revendications précédentes pour permettre à un pilote d'interagir avec les applications (12A, 12B).

16. Aéronef comprenant un dispositif de visualisation et de contrôle (10) selon l'une quelconque des revendications précédentes.
